(19) **Europäisches Patentamt**
**European Patent Office**
**Office européen des brevets**

(11) **EP 2 276 014 A1**

(12) **EUROPEAN PATENT APPLICATION**
published in accordance with Art. 153(4) EPC

(43) Date of publication:
**19.01.2011 Bulletin 2011/03**

(51) Int Cl.:
***G09B 23/32*** *(2006.01)*

(21) Application number: **08873260.7**

(86) International application number:
**PCT/JP2008/067697**

(22) Date of filing: **30.09.2008**

(87) International publication number:
**WO 2009/113196 (17.09.2009 Gazette 2009/38)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.03.2008 JP 2008061956**

(71) Applicants:
• **Waseda University**
**Tokyo 169-8050 (JP)**
• **Kyoto Kagaku Co., Ltd.**
**Kyoto-shi, Kyoto 612-8388 (JP)**

(72) Inventors:
• **TAKANISHI, Atsuo**
**Tokyo 169-8555 (JP)**
• **NOH, Yohan**
**Tokyo 169-8555 (JP)**
• **SOLIS, Jorge**
**Tokyo 169-8555 (JP)**

• **ISHII, Hiroyuki**
**Tokyo 169-8555 (JP)**
• **OGURA, Yu**
**Tokyo 169-8555 (JP)**
• **NAGAHIRO, Koji**
**Tokyo 169-8555 (JP)**
• **SEGAWA, Masanao**
**Tokyo 169-8555 (JP)**
• **SHIMOMURA, Akihiro**
**Tokyo 169-8555 (JP)**
• **KATAYAMA, Tamotsu**
**Kyoto-shi**
**Kyoto 612-8388 (JP)**
• **HATAKE, Kazuyuki**
**Kyoto-shi**
**Kyoto 612-8388 (JP)**

(74) Representative: **Grünecker, Kinkeldey,**
**Stockmair & Schwanhäusser**
**Anwaltssozietät**
**Leopoldstrasse 4**
**80802 München (DE)**

(54) **TRACHEAL INTUBATION TRAINING APPARATUS**

(57)     It is an object of the invention to evaluate a tracheal intubation technique in consideration of various points to remember related to a tracheal intubation treatment. A tracheal intubation training apparatus (10) is provided with a model (14) which has an appearance modeled on the upper body portion of a human body and an evaluation means (15) which evaluates the tracheal intubation technique carried out to the model (14). The model (14) has pressure sensors (46, 57, 62, 66) which measure pressurizing force when a tracheal intubation device (12) touches respective sections (31, 32, 34, 36, 41, 63) modeled on sections from the inside of the mouth through to that of the trachea of a living body, position detection sensors (69, 76) which detect whether the tracheal intubation device (12) exists in the predetermined areas of the tracheal part (63) and an esophageal part (64), and angle sensors (79 to 81) which detect the postures of a head/face part (28A), a neck/chest part (28B), and a lower jaw part (31). The evaluation means (15) calculates the evaluation value (Z) of the intubation technique according to the measured values of the respective sensors.

FIG.1

**Description**

Technical Field

The present invention relates to a tracheal intubation training apparatus, and more specifically to a tracheal intubation training apparatus which enables the objective evaluation of the technique of tracheal intubation performed by physicians, emergency medical technicians, and the like.

Background Art

When disturbance of consciousness and cardiopulmonary arrests occur due to diseases, accidents, and others, or general anesthesia is performed at the time of operation, the muscle in the lower jaw of those patients becomes flaccid resulting in a downward displacement of the root of the tongue (lingual radix). As a result, the passage of air (airway) from the inside of the mouth to the lung of the patient may be partially obstructed so that air is not provided into the lung of the patient. In such a state of airway obstruction, a treatment in which a tracheal intubation tube is inserted from the mouth into the airway of the patient by a physician or an emergency medical technician to force air into the lung of the patient through the tracheal intubation tube is performed. In this treatment, an instrument called a laryngoscope, which has an approximately L-shape in the side view is used to place a blade located at the distal end side thereof to the inside of the mouth, raise the downwardly displaced lingual radix portion to hold up the obstructed site of the airway, and insert the tracheal intubation tube from the inside of the mouth into the airway while confirming the state of the inside of the mouth by the laryngoscope. Here, the tracheal intubation tube includes a tube body which is provided with a blowout part for air at its far distal end, and a cuff which is provided around the tube body at a position slightly more rearward than the blowout part. The cuff is provided in a balloon shape which can expand and contract according to the amount of air to be injected into the inside thereof, and when the blowout part reaches an appropriate position inside the trachea in the airway, air is fed into the cuff from the outside so that the cuff expands thereby being brought into contact with the trachea wall. Then, in this state, air from outside the body is supplied to the trachea from the blowout part through inside the tube body. At this time, the gap between the outside of the concerned tube body and the tracheal wall is obstructed by the cuff located around the tube body. As a result of that, it becomes possible to prevent a backflow of the air, which has been supplied toward the lung from the blowout part located more backward than the cuff in the trachea, in the direction toward outside the body, which is opposite the direction toward the lung, and at the same time to prevent an inflow of foreign substances, such as blood which has flown out into the mouth and gastric juice from the esophagus, into the lung.

At the time of such tracheal intubation treatment, since there is no time to be lost, the tracheal intubation tube needs to be inserted instantly and appropriately into the airway and on regular basis training is indispensable for that purpose. For such training, training tools such as a mannequin-like model disclosed in Patent Document 1 and the like are used.
The model is provided with an airway structure which is modeled after an airway and an esophageal structure modeled after an esophagus, and is adapted to enable tracheal intubation training to be performed with a joint use of an esophageal intubation detection device which is used for secondary confirmation at the site of emergency medical care. That is, this model is for the purpose of providing training necessary to prevent erroneous insertion of a tracheal intubation tube into an esophagus during tracheal intubation, and is configured such that such erroneous insertion into an esophagus can be detected by an esophageal intubation detection device.

By the way, at the time of tracheal intubation, there are other various points to remember other than the prevention of erroneous insertion of a tracheal intubation tube into an esophagus, which is the subject of training in the model of Patent Document 1, and training in consideration of such points to remember also becomes necessary.

For example, when raising a lingual radix by using a laryngoscope, it is needed to place the blade located at the distal end side of the laryngoscope against an appropriate site of the tongue so that the tongue is successfully held up by rotating the laryngoscope with the site as the fulcrum. However, since a novice tends to rotate the laryngoscope with a wrong site as the fulcrum sometimes failing to successfully hold up the tongue, training for accurately finding a proper site for the rotation fulcrum of the laryngoscope, and quickly placing the blade against the site becomes necessary. Further, when the tongue is held up by the laryngoscope, the blade thereof may come into contact with the front teeth portion of the upper jaw causing an accidental breakage of the teeth, and therefore training for avoiding to press the blade against the front teeth portion of the upper jaw while rotating the laryngoscope also becomes necessary.

Further, when the tracheal intubation tube is put in and taken out, the tracheal intubation tube will pass through a gap formed in the center of the vocal cord and, at this time, the tracheal intubation tube may comes into contact with the vocal cord thereby damaging the vocal cord. Therefore, when putting in and taking out the tracheal intubation tube, it is necessary to pay enough attention to avoid a contact with the vocal cord at the same time.

Further, the blowout part located at the far distal end of the tracheal intubation tube is needed to be disposed in a portion in the trachea which is more proximal than the bronchus. That is, if the blowout part has reached inside one trachea which is branched off from the bronchus, a one-lunged state will be caused in which air is supplied only into one lung. Therefore, training for reliably positioning the blowout part in a proper portion in the trachea, which is located more proximal than the bronchus, also becomes necessary.

Further, upon injection of air into the cuff, an insufficient expansion of the cuff may cause a backflow or the like of the supplied air from the blowout part as described above. On the other hand, an excess expansion of the cuff will cause a risk of damaging the mucosa of the tracheal wall resulting in cell necroses. Therefore, training for expanding the cuff at an appropriate pressure also becomes necessary.

Patent Document 1: Japanese Patent Laid-Open No. 2005-227372

Disclosure of the Invention

Problems to be Solved by the Invention

However, in the case of the model of the above described Patent Document 1, even if tracheal intubation training is performed using the model, objective evaluation of the entire tracheal intubation training in consideration of the points to remember as described so far cannot be obtained and it is only possible to grasp whether or not the tracheal intubation tube is erroneously inserted into the esophagus. Moreover, grasping an erroneous insertion into the esophagus requires combined use of an esophageal intubation detection device, and when the training is performed without using the esophageal intubation detection device, the evaluation of the training is not possible.

The present invention has been devised in view of the above described problems, and has its object to provide a tracheal intubation training apparatus which enables an objective evaluation of tracheal intubation technique in consideration of various points to remember with respect to tracheal intubation treatment when physicians, emergency medical technicians, and the like undergo tracheal intubation training.

Means for Solving the Problems

(1) In order to achieve the above described object, the present invention comprises a model which has an external shape modeled after an upper body portion of a human body and by which tracheal intubation training using a tracheal intubation device is performed, and evaluation means for evaluating tracheal intubation technique exercised on the model, wherein

the model comprises: a head/face part which corresponds to a portion above a neck portion of a human body; a neck/chest part which is rotatably linked to the head/face part, and of which inclination angle with respect to a predetermined installation surface is adjustable; and a posture detection sensor for detecting postures of the head/face part and the neck/chest part, wherein

the head/face part comprises: a head part which corresponds to a head part of a human body; a lower jaw part which is rotatably linked to the head part; a posture detection sensor for detecting a posture of the lower jaw part; an inner mouth part provided between the head part and the lower jaw part; an upper jaw front teeth part which is fixed to an upper jaw portion of the head part; a pressure sensor for measuring a pressing force applied to the upper jaw front teeth part; a tongue part disposed in the inner mouth part; a pressure sensor for measuring a pressing force applied to the tongue part; a vocal cord part provided in a rearward side of the tongue part; and a pressure sensor for measuring a pressing force applied to the vocal cord part, wherein

the neck/chest part comprises: a tracheal part which is linked to the inner mouth part through the vocal cord part; an esophageal part which is disposed in parallel with the tracheal part, and is linked to the inner mouth part; a pressure sensor for measuring a pressing force applied to an inner wall of the tracheal part; and a position detection sensor for confirming the presence or absence of the tracheal intubation device in the tracheal part and in the esophageal part, and wherein

the evaluation means is configured to calculate an evaluation value of tracheal intubation technique by substituting a numerical value for each parameter of a prestored evaluation function based on measured values from each of the posture detection sensors, each of the pressure sensors, and each of the position detection sensors.

(2) Further, the above described evaluation means is configured to comprise: a measurement part for obtaining measurement results by each of the posture detection sensors, each of the pressure sensors, and each of the position detection sensors; a time measurement part for measuring a tracheal intubation time from a start of training to an end of tracheal intubation; a data arithmetic part for determining a value to be substituted for the parameter through a predetermined function from data of the measurement part and the time measurement part; and an evaluation value calculation part for calculating the evaluation value by substituting each value determined at the data arithmetic part into the evaluation function.

Advantages of the Invention

According to the present invention, it is possible to perform an objective evaluation of tracheal intubation technique for a tracheal intubation training when a physician, emergency medical technician, or the like undergoes the training, and further to perform an evaluation of tracheal intubation technique in consideration of points to remember with respect to tracheal intubation treatment, by appropriately disposing each sensor at a site which needs to be handled with a caution during tracheal intubation treatment.

That is, when performing tracheal intubation treatment, a physician, emergency medical technician, or the like is required to incline the head part and the chest part of a patient at an appropriate angle, and keep the lower jaw part to be opened at an appropriate angle. In this respect, since the posture detection sensors are disposed in the head/face part, the neck/chest part, and the lower jaw part of the model, and the states of the postures of the head/face part, the neck/chest part, and the lower jaw part measured by the sensors are reflected to the evaluation value, it becomes possible to perform an objective evaluation of such preparatory works.

Moreover, since pressure sensors are disposed in the sites of the model which correspond to the sites in a body with which a tracheal intubation device such as a tracheal intubation tube and a laryngoscope, etc. may come into contact, and pressing forces applied to those sites are detected by the pressure sensors and are reflected to evaluation values, it is possible to perform an objective evaluation of tracheal intubation technique in consideration of points to remember relating to the above described contact. That is, it is possible to perform objective evaluation from the viewpoints of: if the blade of the laryngoscope is not in contact with the front teeth part of the upper jaw; if the blade is placed against an appropriate position of the tongue part; if the tracheal intubation tube is not in contact with the vocal cord; and if the pressure applied to the tracheal wall by the cuff of the tracheal intubation tube is appropriate, and so on.

Moreover, since position detection sensor is disposed in the airway part and the position of the tracheal intubation device in the airway part is detected by the position detection sensor and reflected to evaluation values, it is possible to objectively evaluate the tracheal intubation technique in consideration of the points to remember relating to inadequate tracheal insertion in a trachea, such as if the far distal end of the tracheal intubation tube has not reached the bronchus portion, and so on.

Moreover, while the tracheal intubation device should not enter into an esophagus during tracheal intubation treatment, since position detection sensors are disposed in the esophageal part of the model and whether or not the tracheal intubation device has entered into the esophageal part is sensed and reflected to evaluation values, it is possible to perform an objective evaluation of tracheal intubation technique in consideration of such erroneous insertion of the tracheal intubation device into an esophagus.

Brief Description of the Drawings

Figure 1 is a schematic configuration diagram of a tracheal intubation training apparatus relating to the present embodiment;
Figure 2 is an enlarged sectional view of a model body;
Figure 3 is an enlarged longitudinal sectional view of a pressure sensor;
Figure 4 (A) is a sectional view of an airway of the vicinity of a vocal cord part, and (B) is a sectional view taken along the A-A line of (A);
Figure 5 is an enlarged sectional view of a tracheal part;
Figure 6 is a sectional view taken along the line A-A of Figure 5.

Best Mode for Carrying Out the Invention

Hereafter, embodiments of the present invention will be described with reference to the drawings.

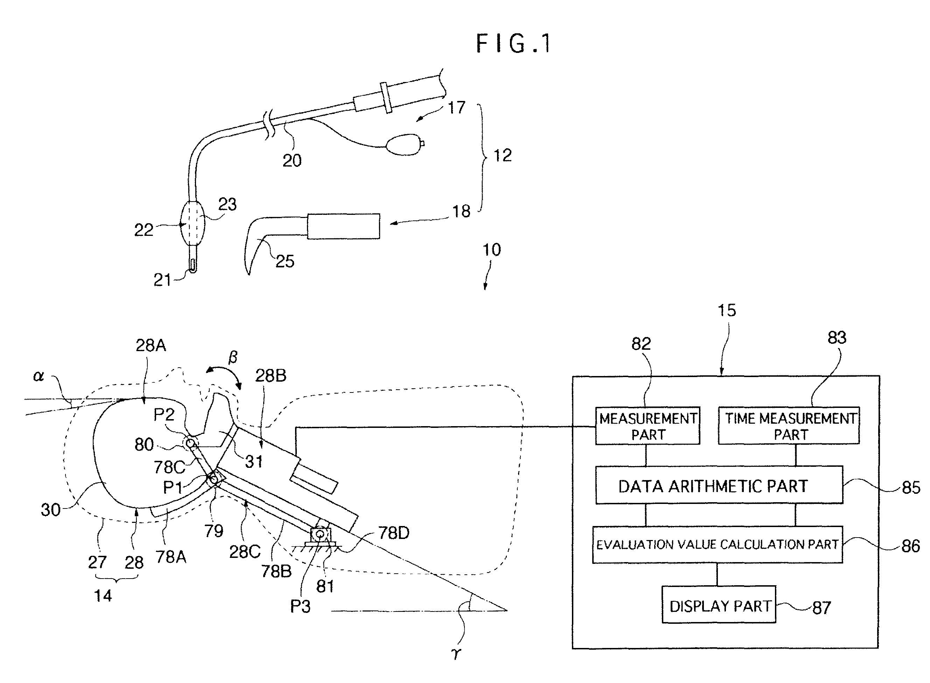

Figure 1 shows a schematic configuration diagram of a tracheal intubation training apparatus relating to the present embodiment. In this figure, a tracheal intubation training apparatus 10 is an apparatus for trainees such as physicians, emergency medical technicians, and the like to perform tracheal intubation training using a tracheal intubation device 12 and is configured such that as the result of the training, an evaluation of tracheal intubation technique can be performed. The tracheal intubation training apparatus 10 is configured to comprise a model 14 having an external shape modeled after an upper body portion of a human body and by which tracheal intubation training is performed using the tracheal intubation device 12, and evaluation means 15 for evaluating tracheal intubation technique exercised on the model 14.

Here, examples of the tracheal intubation device 12 include a heretofore known tracheal intubation tube 17 and a laryngoscope 18.

The tracheal intubation tube 17 includes a tube body 20 through which air passes, a blowout part 21 for air which is provided at a far distal end of the tube body 20, and a cuff 22 which is provided around the tube body 20 slightly rearward from the blowout part 21. The cuff 22 is provided as a balloon-like structure which is configured such that air can be injected into the inside thereof from the outside, and which can expand and contract depending on the injection amount of the air. Moreover, in the present embodiment, a reflective material 23 which has a light shielding property is coated on the surfaces of the tube body 20 and the cuff 22 so that a measurement described later is made possible.

The laryngoscope 18 includes a blade 25 having an approximately L-shape in the side view, at its distal end side.

The model 14 includes a cover 27 which is modeled after a surface portion of a human body, and a model body 28 which is enclosed by the cover 27 and is modeled after sites of a human body which are needed for tracheal intubation training.

The model body 28 has a structure in which an airway structure from a mouth part to a bronchus of a human body, and an esophageal structure from the inside of the mouth are modeled, and is configured to include a head/face part 28A which corresponds to a portion above the neck part of a human body, a neck/chest part 28B which corresponds to a portion not higher than the neck part of a human body, and a frame 28C which supports the head/face part 28A and the neck/chest part 28B.

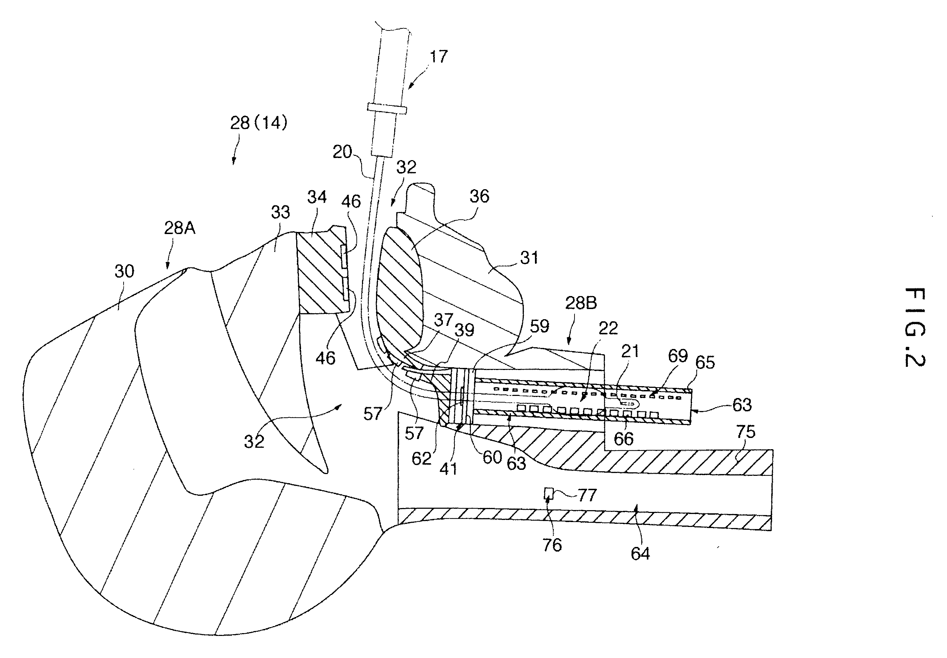

The head/face part 28A includes: as shown in Figure 2, a head part 30 which corresponds to a head part of a human body; a lower jaw part 31 which is rotatably linked to the head part 30; an inner mouth part 32 which is provided between the head part 30 and the lower jaw part 31 and above which there is an open space in Figure 2; an upper jaw front teeth part 34 which is fixed to the upper jaw part 33 on the right side of the head part 30 in Figure 2; a tongue part 36 which is provided on the left side of the lower jaw part 31 in Figure 2 and is disposed in the inner mouth part 32; an epiglottis part 39 provided in the vicinity of a lingual radix part 37 which is located on the rearward side of an inner mouth part 32 and which makes the root of the tongue part 36; and a vocal cord part 41 which is provided at immediate right of the epiglottis part 39 in Figure 2.

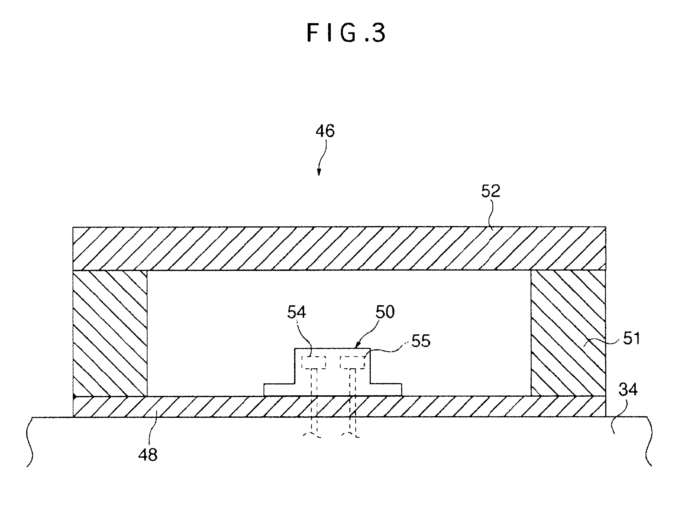

The upper jaw front teeth part 34 is attached with pressure sensors 46, which are linked to the evaluation means 15 (see Figure 1), at a number of points on the surface of the inner mouth part 32 side. The pressure sensor 46 is configured, as shown in Figure 3, to include a base 48 which is fixed to the upper jaw front teeth part 34, a heretofore known photo-interrupter 50 which is fixed on the base 48, an elastic member 51 such as sponge which covers the circumference of the photo-interrupter 50, and a reflector plate 52 which is fixed on the upper surface of the elastic member 51.

The photo-interrupter 50 includes a light emitting element 54 such as a light emitting diode and a light receiving element 55 such as a photo transistor, etc.

Although the elastic member 51 is formed of a black sponge member, this is not limiting and any material can be used provided it is elastic and can be deformed by a pressing force from the outside.

The reflector plate 52 is formed of a plate material having a predetermined light shielding property, and is configured to prevent the light radiated from the light emitting element 54 of the photo-interrupter 50 from being leaked to the outside of the pressure sensor 46 and to prevent the light from the outside of the pressure sensor 46 from entering into the elastic member 51.

According to the above described configuration, the light radiated from the light emitting element 54 is be reflected by the reflector plate 52 and detected by the light receiving element 55. Here, if an external force is applied to the reflector plate 52 on the upper surface side of the pressure sensor 46, the elastic member 51 deforms according to the magnitude of the external force causing a change in the distance from reflector plate 52 to the photo-interrupter 50. Then, the amount of light detected by the light receiving element 55 will change, thereby causing a change in the current value outputted from the light receiving element 55. That is, as the pressure applied to the reflector plate 52 increases, the photo-interrupter 50 moves closer to the reflector plate 52, causing an increase in the amount of light detected by the light receiving element 55 and an increase in the current value outputted from the light receiving element 55. In this way, by using the pressure sensor 46, as the result of the current value of the light receiving element 55 being changed in accordance with the deformation of the elastic member 51 due to addition of external force, the pressure applied to the reflector plate 52 can be detected by measuring the voltage associated with the change in the current value.

The tongue part 36 is formed into a shape close to that of a human tongue by using a material which has elasticity close to that of the tongue.

There are attached at a number of points of the lingual radix part 37, as shown in Figure 2, pressure sensors 57 having the substantially same structure as that of the pressure sensor 46 provided in the upper jaw front teeth part 34. The pressure sensor 57 in this case is also linked to the evaluation means 15 of Figure 1. It is noted that although not limiting, in the present embodiment, there are attached a total of four pressure sensors 57: two for each of the two steps in a rightward location seen from the front of a human body. These pressure sensors 57 are used for performing the evaluation described later from the viewpoint that it is the right way to hold up the right rearward side of the tongue with the blade 25 (see Figure 1) when performing tracheal intubation.

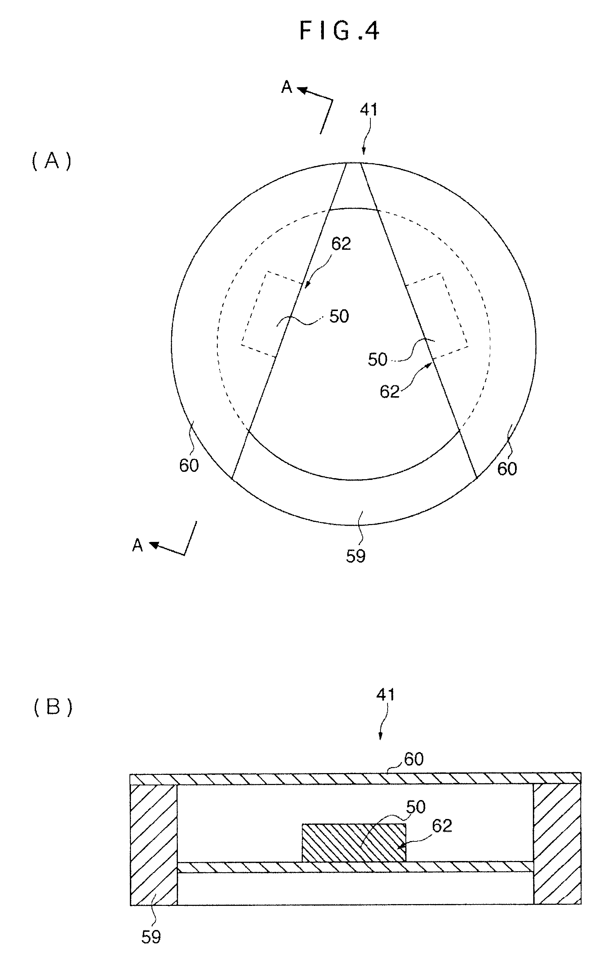

The vocal cord part 41 is configured as shown in Figure 4 to include a tube part 59, a pair of model vocal cords 60, 60 disposed at both left and right sides of the tube part 59 in Figure 4(A), and a pressure sensor 62 which is provided at the back side of each model vocal cord 60, 60 in Figure 4(A), and is linked to the evaluation means 15 of Figure 1.

The model vocal cord 60, 60 is provided as a thin plate having a light shielding property and an elastic property and is adapted to obstruct a part of the internal space of the tube part 59.

The pressure sensor 62 has the substantially same structure as that of the pressure sensor 46 described in Figure 3, and the same or similar components as those of the pressure sensor 46 are denoted by the same reference symbols thereby omitting the description thereof. In this case, when a pressing force is applied to the model vocal cord 60 from upward in Figure 4(B), the central portion in the figure elastically deforms downwardly, resulting in a change (decrease) in the separation distance with the pressure sensor 62. Then, since the model vocal cord 60 has a similar light shielding property as that of the reflector plate 52, the light income at the photo-interrupter 50 by the light reflected by the model vocal cord 60 changes and as in the case of the pressure sensor 46, and the amount of displacement of the model vocal cord 60 can be detected through the voltage change associated with the change in the light income.

The neck/chest part 28B includes, as shown in Figure 2, a tracheal part 63 which is linked from the inner mouth part 32 through the tube part 59 of the vocal cord part 41, and an esophageal part 64 which links to the inner mouth part 32 and is disposed in parallel in the lower side of the tracheal part 63 in the figure.

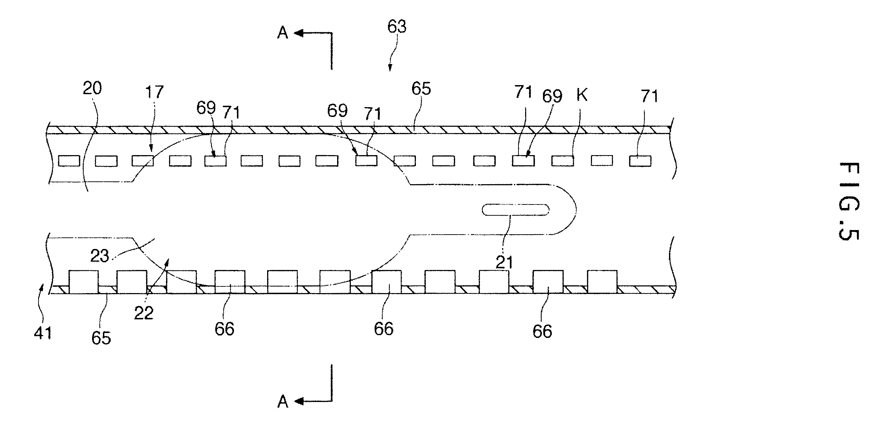

The tracheal part 63 includes, as shown in Figure 5, a tube wall 65, and a plurality of pressure sensors 66 and a number of position detection sensors 69, which are respectively provided in the tube wall 65, and respectively link to the evaluation means 15 of Figure 1.

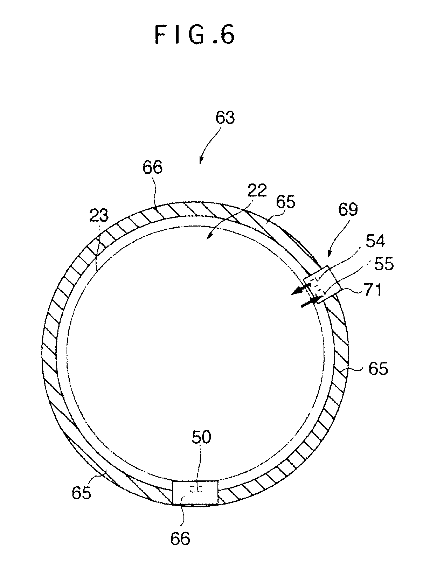

The pressure sensor 66 is fixed to the tube wall 65 in a state of projecting from the inner side of the tube wall 65, as shown in Figures 5 and 6, and a number of them are provided along the axial direction of the tracheal part 63. These pressure sensors 66 has a similar configuration to that of the above described pressure sensor 46 provided in the upper jaw front teeth part 34, and the same or similar components to those of the above described pressure sensor 46 are denoted by the same reference symbols thereby omitting the description thereof. This pressure sensor 66 is adapted to be able to measure a pressing force applied to the tube wall 65 due to expansion of the cuff 22 when the cuff 22 inserted into the tracheal part 63 expands during training. The measurement principle is the same as that for the pressure sensor 46.

The position detection sensor 69 is, as shown in Figures 5 and 6, made up of a photo-interrupter 71, and a number of the position detection sensors 69 are disposed along the axial direction of the tracheal part 63. These photo-interrupters 71 are aligned in the tube wall 65 in a state of projecting from the inner side of the tube wall 65, and include a light emitting element 54 and a light receiving element 55 as in the case of the above described photo-interrupter 50.

The photo-interrupter 71 in this case is configured such that the light radiated from the light emitting element 54 of the photo-interrupter 71 is detected by the light receiving element 55 in the same photo-interrupter 71, as shown in the arrow in Figure 6. That is, when the tracheal intubation tube 17 is present at the position of the photo-interrupter 71, the light from the light emitting element 54 is reflected at the tracheal intubation tube 17 by the reflective material 23 of its surface, and the light income of the light receiving element 55 increases; therefore, detecting the change in the light income will enable the determination of whether or not the tracheal intubation tube 17 is present at the position opposite to each photo-interrupter 71. Therefore, when a light receiving state is measured at each photo-interrupter 71 and a measurement result at a certain photo-interrupter 71 shows a light income not more than a predetermined threshold value, it is determined that there is no tracheal intubation tube 17 at the opposite position to the photo-interrupter 71, and that the position (indicated by K in Figure 5) of the photo-interrupter 71 which is located at a boundary of the presence or absence of the tracheal intubation tube 17 is the position where the distal end of the tracheal intubation tube 17 is present.

The esophageal part 64 includes, as shown in Figure 2, a tube wall 75 which forms an internal space linked to the inner mouth part 32, and a position detection sensor 76 which is provided in the tube wall 75 and is linked to the evaluation means 15 of Figure 1

The position detection sensor 76 is a sensor having a similar structure to that of the position detection sensor 69 of the tracheal part 63, and is configured such that a photo-interrupter 77 is provided at a position of the tube wall 75 closer to the entrance of the esophageal part 64. The position detection sensor 76 in the esophagus is adapted to detect an intrusion of the tracheal intubation tube 17 into the esophageal part 64 by the same principle as in the case of the position detection sensor 69 when the tracheal intubation tube 17 is erroneously inserted into the esophageal part 64.

The frame 28C includes, as shown in Figure 1, a first frame 78A for supporting a head/face part 28A; a second frame 78B which is connected to the first frame 78A so as to be rotatable centering around a fulcrum P1, and supports the neck/chest part 28B; a third frame 78C which connects between the first frame 78A and the rearward side fulcrum P2 of the lower jaw part 31 and enables the lower jaw part 31 to be rotatable centering around the fulcrum P2; a base 78D which is rotatably connected to s fulcrum P3 opposite the fulcrum P1 in the second frame 78B; and angle sensors 79, 80, and 81 which are provided for the purpose of detecting the postures of the head/face part 28A, the neck/chest part 28B, and the lower jaw part 31, and each of which is made up of a potentiometer as a posture detection sensor for measuring the rotational angle of each fulcrum P1 to P3.

The configuration of the frame 28C described above enables the head/face part 28A to be rotated centering around the fulcrum P1 with respect to the neck/chest part 28B, and a head part angle $\alpha$ which is the rotational angle at that time is measured by the angle sensor 79. Moreover, the lower jaw part 31 can be rotated centering around the fulcrum P2 with respect to the head part 30, and a jaw angle $\beta$ which is the rotational angle at this moment is measured by the angle sensor 80. Further, the neck/chest part 28B can be rotated centering around the fulcrum P3 with respect to the installation surface of the model 14, and a cervical part angle $\gamma$ which is the rotational angle at this moment is measured by the angle sensor 81.

The evaluation means 15 is made up of software and hardware, and realized by a number of program modules and processing circuits such as processors, and the like. The evaluation means 15 is adapted to calculate an evaluation value Z of tracheal intubation technique by substituting numerical values for each parameter $X_1$ to $X_8$ of a prestored evaluation function based on the measured values from each of the pressure sensors 46, 57, 62, 66, each of the position detection sensors 69, 76, and each of the angle sensors 79, 80, 81.

The evaluation function in this case is represented by the following equation.

$$Z = AX_1 + BX_2 + CX_3 + DX_4 + EX_5 + FX_6 + GX_7 + HX_8$$

It is noted that A to H are predetermined constants. Specifically, each value to be substituted for the above described parameters $X_1$ to $X_8$ are obtained for a number of skilled personnel such as physicians, emergency medical technicians, and the like and a number of inexperienced personnel, and the constants A to H are determined in advance through calculation by using a known discriminant analysis such that the average of evaluation values Z becomes zero.

In the evaluation function, for example, with 100 points as full marks, it is determined that as the evaluation value Z becomes higher, the tracheal intubation technique is superior. Note that it is also possible to arbitrarily set the constants A to H by assigning weights to some or all of them in consideration of the risk of the technique corresponding to respective parameters $X_1$ to $X_8$.

The evaluation means 15 is configured, as shown in Figure 1, to include: a measurement part 82 for obtaining measurement results by each of the pressure sensors 46, 57, 62, 66, each of the position detection sensors 69, 76, and each of the angle sensors 79, 80, 81; a time measurement part 83 for measuring the tracheal intubation time from the start of training to immediately before the injection of air into the trachea; a data arithmetic part 85 which determines values to be substituted for the parameters $X_1$ to $X_8$ by a prestored function from the data of the measurement part 82 and the time measurement part 83; an evaluation value calculation part 86 which calculates the evaluation value Z by substituting each value determined at the data arithmetic part 85 into the evaluation function; and a display part 87 for displaying the determined evaluation value Z.

In the data arithmetic part 85, values to be substituted for each parameter $X_1$ to $X_8$ of the evaluation function are determined from measured values of each sensor 46, 57, 62, 66, 69, 76, 79-81 by the following function. Although not limited thereto, these values are determined as technique evaluation indices between 0 and 1.

The parameter $X_1$ relates to a tracheal intubation index for technique evaluation from the viewpoint of the length of tracheal intubation time, and is determined by substituting a tracheal intubation time T measured at the time measurement part 83 into the following equation.

[Equation 1]

$$X_1 = \begin{cases} -\dfrac{T}{10T_1} + 1 & 0 < T < T_1 \\[4mm] -\dfrac{9}{10(T_2 - T_1)}T + \dfrac{9T_2}{10(T_2 - T_1)} & T_1 < T < T_2 \\[4mm] 0 & T_2 < T \end{cases}$$

Where, $T_1$ is a time constant which is considered to be medically optimal (for example, 30 seconds) within the time period from the start to the end of the insertion of the tracheal intubation tube 17, and $T_2$ is a time constant which is considered to be medically unsuccessful (for example, 60 seconds).

The parameter $X_2$ relates to an optimal posture index for technique evaluation from the viewpoint of optimized postures of the head part and the cervical part (sniffing position), and is determined as described below from a head part angle $\alpha$ and a cervical part angle $\gamma$ which are measured values of the angle sensors 79, 81.

[Equation 2]

$$X_2 = JY + KZ$$

$$Y = \begin{cases} \dfrac{\alpha}{\alpha_1} & 0 < \alpha < \alpha_1 \\[2em] -\dfrac{\alpha}{\alpha_1} + 2 & \alpha_1 < \alpha < 2\alpha_2 \end{cases}$$

$$Z = \begin{cases} \dfrac{\gamma}{\gamma_1} & 0 < \gamma < \gamma_1 \\[2em] -\dfrac{\gamma}{\gamma_1} + 2 & \gamma_1 < \gamma < 2\gamma_2 \end{cases}$$

Where, J and K are constants. Moreover, $\alpha_1$ is an angle constant of the head part (for example, 16 degrees) which is considered to be medically optimal, and $\gamma_1$ is an angle constant of cervical part (for example, 32 degrees) which is considered to be medically optimal.

The parameter $X_3$ relates to an incisor part force index for technique evaluation from the viewpoint of the contact with the upper jaw front teeth part 34 which may cause a breakage of the front tooth of a patient. The parameter $X_3$ is determined as described below from measured values F(t) of the pressure sensor 46 which are measured at regular intervals (for example, every 20 msec) during tracheal intubation training, and the above described tracheal intubation time T. It is noted that hereafter "t" represents an elapsed time from the start of training.

[Equation 3]

$$X_3 = LY + MZ$$

$$y = \int_0^T F(t)dt$$

$$Y = \begin{cases} 1 - \dfrac{y}{y_1} & 0 < y < y_1 \\ 0 & y_1 < y \end{cases}$$

$$Z = \begin{cases} 1 - \dfrac{F(t)_{MAX}}{F_1} & 0 < F(t)_{MAX} < F_1 \\ 0 & F_1 < F(t)_{MAX} \end{cases}$$

Where, L and M are constants. Moreover, $y_1$ is a constant which provides an average value of y respectively determined by the above equation in the manipulations of a number of inexperienced personnel performed in advance. Further, $F(t)_{MAX}$ is a maximum value of the measure values F(t) of the pressure sensor 46, and $F_1$ is a constant which provides a minimum value (for example, 200 N) at which an incisor of a human may be broken.

The parameter $X_4$ relates to a cuff part pressure index for technique evaluation from the viewpoint of the pressing state of the cuff 22 against the airway inner wall of a patient when the cuff 22 is expanded. The parameter $X_4$ is determined as described below from a force F which is the total sum of measured values of each pressure sensor 66 when the cuff 22 is expanded.

[Equation 4]

$$P = kF$$

$$X_4 = \begin{cases} \dfrac{P}{P_1} & 0 < P < P_1 \\\\ 1 & P_1 < P < P_2 \\\\ -\dfrac{P}{P_3 - P_2} + \dfrac{P_3}{P_3 - P_2} & P_2 < P < P_3 \\\\ 0 & P_3 < P \end{cases}$$

Where, k is a constant. Moreover, $P_1$ is a constant to represent a lower limit value within a range of the pressing force applied to the airway inner wall of a patient, which is considered to be medically appropriate, and $P_2$ is a constant to represent an upper limit value within the range. Further, $P_3$ is a minimum value of the pressing force which should not be applied to the airway inner wall from medical point of view. Examples of $P_1$, $P_2$, and $P_3$ include, for example, 20, 30, and 40 (mmH$_2$O).

The parameter $X_5$ relates to a tongue part force index for technique evaluation from the viewpoint of whether or not the tongue part is held up at an appropriate position which is the right side of the tongue part when the tongue part of the patient is held up by the laryngoscope 18. The parameter $X_5$ is determined as described below from voltage values V(n) measured at each pressure sensor 57 while the tongue part 36 is held up by the laryngoscope 18.

[Equation 5]

$$X_5 = \sum_{n=1}^{n} Q(n)F(n)$$

$$F(n) = \frac{V(n) - V_1}{V_2 - V_1}$$

Where, the voltage value V(n) represents measured values of each of the 1st to n-th pressure sensors 57 (n=4 in the present embodiment), and Q(n) represents constants corresponding to each pressure sensor 57. Moreover, $V_1$ is a constant which gives an average value of the pressing force applied to the tongue part in the manipulations of a number of inexperienced personnel which have been performed in advance, and $V_2$ is a constant which gives an average value of the pressing force applied to the tongue part in the manipulations of a number of physicians which have been performed in advance.

The parameter $X_6$ relates to a tube position index for technique evaluation from the viewpoint of the position of the distal end side of the tracheal intubation tube 17 during tracheal intubation. The parameter $X_6$ is determined as described below from the detection results of the position detection sensors 69 and 76.

That is, when an insertion of the tracheal intubation tube 17 into the esophageal part 64 is detected by the position detection sensor 76, it is determined as being an esophageal intubation and the parameter $X_6$ is set as $X_6 = 0$.

Moreover, when an insertion of the tracheal intubation tube 17 into the tracheal part 63 is detected by the position detection sensor 69, it is determined where the distal end side of the tracheal intubation tube 17 is located, according to the detected state of each position detection sensor 69. Then, when it is determined that the distal end of the tracheal intubation tube 17 extends into the inside of the bronchus, it is determined as being a bronchus intubation and the parameter $X_6$ is set as $X_6 = 0.5$. On the other hand, when it is determined that the distal end of the tracheal intubation tube 17 is located more forward than the bronchus, it is determined as being an appropriate tracheal intubation and the parameter $X_6$ is set as $X_6 = 1$.

The parameter $X_7$ relates to a mouth opening level index for technique evaluation from the viewpoint of the level of mouth opening of the inner mouth part 32. This parameter $X_7$ is established from the reason that while there is risk of damaging the incisor part of a patient upon insertion of the laryngoscope 18 if the mouth opening is not enough, forced opening of the mouth will provoke the risk of damaging the jaw joint of a patient. In this case, the parameter $X_7$ is determined as described below from a rotational angle of a lower jaw part 31 (jaw angle β) measured by the angle sensor 80 immediately before the insertion of the laryngoscope 18 into the inner mouth part 32.

[Equation 6]

$$X_7 = \begin{cases} \dfrac{L(\beta)}{L_1} & 0 < L(\beta) < L_1 \\[2ex] -\dfrac{L(\beta)}{L_1} + 2 & L_1 < L(\beta) \end{cases}$$

Where, L(β) is a mouth opening amount which is obtained by mathematical operation from jaw angles (β, and $L_1$ is a mouth opening amount (for example, 60 mm) which is considered to be medically optimal during tracheal intubation.

The parameter $X_8$ relates to a vocal cord part index for technique evaluation from the viewpoint of the contact of the tracheal intubation tube 17 with the vocal cord part 41. The parameter $X_8$ is determined as described below from the voltage values V(t) measured at regular intervals during the period from the start of training to the end of a tracheal intubation.

[Equation 7]

$$X_8 = \begin{cases} 1 - \dfrac{Y}{Y_1} & 0 < Y < Y_1 \\ 0 & Y_1 < Y \end{cases}$$

$$Y = \int_0^T \left| \frac{dV(t)}{dt} \right| dt$$

Where, $Y_1$ is a constant representing an average value of Y values determined by the above described equation in the manipulations of a number of inexperienced personnel which have been performed in advance.

At the evaluation value calculation part 86, each value determined at the data arithmetic part 85 is substituted for the parameters $X_1$ to $X_8$ of the evaluation function to determine an evaluation value Z.

It is noted that in addition to the above described parameters $X_1$ to $X_8$, any parameters regardless of their kinds and numbers may be adopted provided they relate to an index which has an influence on the superiority of tracheal intubation technique. In this case, an evaluation function may be separately obtained by using the above described discriminant analysis and the evaluation function may be applied. Examples of other parameters include, for example, an index determined based on the magnitude of the external force applied to a lip part by the laryngoscope 18, and an index determined based on the magnitude of the external force applied to an eye and a pharynx part.

Next, the flow of tracheal intubation training and evaluation by use of the tracheal intubation training apparatus 10 will be described.

Time measurement by the time measurement part 83 is started thereby starting tracheal intubation training. At this stage, the trainee holds and moves the head/face part 28A and the neck/chest part 28B such that the model 14 is kept in a suitable posture for tracheal intubation. Moreover, the lower jaw part 31 is rotated so that the inner mouth part 32 of the model 14 is in a mouth open state. At this stage, according to the measured values of the angle sensors 79 to 81, evaluation will be made on if the model 14 is in a proper posture, as well as on whether or not the mouth opening level is appropriate.

Then, the blade 25 of the laryngoscope 18 is inserted into the inner mouth part 32 and the trainee holds up the tongue part 36 and confirms the presence of the epiglottis part 39 and the vocal cord part 41 by using the laryngoscope 18. At this stage, according to the measured values of the pressure sensor 46, evaluation will be made on whether or not the blade 25 is in touch with the upper jaw front teeth part 34, and further according to the measured values of the pressure sensor 57, evaluation will be made on whether or not the distal end side of the blade 25 is placed against a proper position of the lingual radix part 37.

In this state, the trainee inserts the tracheal intubation tube 17 into the tracheal part 63 from the inner mouth part 32. At this stage, according to the measured values of the pressure sensor 62, evaluation will be made on whether or not the tracheal intubation tube 17 interferes with the vocal cord part 41, and also according to the measured values of the position detection sensor 76, evaluation will be made on if the tracheal intubation tube 17 is erroneously inserted into the esophageal part 64.

Then, the trainee inserts the tracheal intubation tube 17 into the further reward of the tracheal part 63, and stops the insertion of the tracheal intubation tube 17 when he/she judges by himself/herself that the blowout part 21 of the tracheal intubation tube 17 is at a proper position forward the bronchus. At this stage, according to the measured values of the position detection sensor 69, evaluation will be made on if the tracheal intubation tube 17 is stopped at an appropriate position of the tracheal part 63.

Then, the trainee injects air into the cuff 22 from outside the body to expand the cuff 22 bringing it in contact with the tube wall 65 of the tracheal part 63 so that the cuff 22 obstructs the gap around the tube body 20. At this stage, according to the measured values of the pressure sensor 66, evaluation will be made on whether or not the cuff 22 is in contact with the tube wall 65 at an appropriate pressure. Then, when tracheal intubation is finished in this way, an elapsed time from the start of training (tracheal intubation time T) is measured and the time needed for the tracheal intubation will be evaluated.

Lastly, the trainee feeds air into the model body 28 through the tracheal intubation tube 17 thereby finishing the training.

Thus, according to such embodiment, a comprehensive evaluation of tracheal intubation technique in consideration of points to remember relating to tracheal intubation treatment becomes possible.

Moreover, each sensor 46, 57, 62, 66, 69, 76, 79-81 will not be limited to sensors having the structure as described in the above described embodiment, and may be replaced with sensors having other structures provided that they exhibit similar effects.

Moreover, although the model 14 is modeled after a human body, the model 14 may also be modeled after an airway section and esophageal section of other animals so as to have the same configuration as that of the present invention, allowing the present invention to be applied to a tracheal intubation training apparatus for animals.

In addition, the configuration of each part of the apparatuses in the present invention will not be limited to the illustrated exemplary configurations, and can be subject to various modifications provided that it exhibits substantially similar effects.

Industrial Applicability

The present invention will be applicable as medical training and evaluation equipment which can automatically perform the evaluation of tracheal intubation training.

Description of Symbols

| | |
|---|---|
| 10 | Tracheal intubation training apparatus |
| 12 | Tracheal intubation device |
| 14 | Model |
| 15 | Evaluation means |
| 28A | Head/face part |
| 28B | Neck/chest part |
| 30 | Head part |
| 31 | Lower jaw part |
| 32 | Inner mouth part |
| 34 | Upper jaw front teeth part |
| 36 | Tongue part |
| 41 | Vocal cord part |
| 46 | Pressure sensor |
| 57 | Pressure sensor |
| 63 | Tracheal part |
| 64 | Esophageal part |
| 66 | Pressure sensor |
| 69 | Position detection sensor |
| 76 | Position detection sensor |
| 79 | Angle sensor (posture detection sensor) |
| 80 | Angle sensor (posture detection sensor) |
| 81 | Angle sensor (posture detection sensor) |
| 82 | Measurement part |
| 83 | Time measurement part |
| 85 | Data arithmetic part |
| 86 | Evaluation value calculation part |
| Z | Evaluation value |

**Claims**

1.  A tracheal intubation training apparatus, comprising a model which has an external shape modeled after an upper body portion of a human body and by which tracheal intubation training using a tracheal intubation device is performed, and evaluation means for evaluating tracheal intubation technique exercised on the model, wherein the model comprises: a head/face part which corresponds to a portion above a neck portion of a human body; a neck/chest part which is rotatably linked to the head/face part, and whose inclination angle with respect to a predetermined installation surface is adjustable; and a posture detection sensor for detecting postures of the head/face part and the neck/chest part, wherein

the head/face part comprises: a head part which corresponds to a head part of a human body; a lower jaw part which is rotatably linked to the head part; a posture detection sensor for detecting a posture of the lower jaw part; an inner mouth part provided between the head part and the lower jaw part; an upper jaw front teeth part which is fixed to an upper jaw portion of the head part; a pressure sensor for measuring a pressing force applied to the upper jaw front teeth part; a tongue part disposed in the inner mouth part; a pressure sensor for measuring a pressing force applied to the tongue part; a vocal cord part provided in a rearward side of the tongue part; and a pressure sensor for measuring a pressing force applied to the vocal cord part, wherein

the neck/chest part comprises: a tracheal part which is linked to the inner mouth part through the vocal cord part; an esophageal part which is disposed in parallel with the tracheal part, and is linked to the inner mouth part; a pressure sensor for measuring a pressing force applied to an inner wall of the tracheal part; and a position detection sensor for confirming the presence or absence of the tracheal intubation device in the tracheal part and in the esophageal part, and wherein

the evaluation means is configured to calculate an evaluation value of tracheal intubation technique by substituting a numerical value for each parameter of a prestored evaluation function based on measured values from each of the posture detection sensors, each of the pressure sensors, and each of the position detection sensors.

2. The tracheal intubation training apparatus according to claim 1, wherein
the evaluation means comprises: a measurement part for obtaining measurement results by each of the posture detection sensors, each of the pressure sensors, and each of the position detection sensors; a time measurement part for measuring a tracheal intubation time from a start of training to an end of tracheal intubation; a data arithmetic part for determining a value to be substituted for the parameter through a predetermined function from data of the measurement part and the time measurement part; and an evaluation value calculation part for calculating the evaluation value by substituting each value determined at the data arithmetic part into the evaluation function.

F I G . 1

FIG.2

# FIG.3

# FIG.4

(A)

(B)

FIG.5

# FIG.6

## INTERNATIONAL SEARCH REPORT

| International application No. |
| --- |
| PCT/JP2008/067697 |

A. CLASSIFICATION OF SUBJECT MATTER
*G09B23/32*(2006.01)i

According to International Patent Classification (IPC) or to both national classification and IPC

B. FIELDS SEARCHED

Minimum documentation searched (classification system followed by classification symbols)
G09B23/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 50-47490 A (Dietmar Rudolf Garve), 26 April, 1975 (26.04.75), Page 2, upper right column, line 10 to page 3, lower right column, line 17; Figs. 2, 5 (Family: none) | 1-2 |
| A | "[24 0097] Kikanshikyo Trainer", Igaku Kyoikuyo Simulator Iryo Gijutsu Training Simulator, Nippon Raito Sabisu Kabushiki Kaisha, 20 February, 2007 (20.02.07) (received date), page 56 | 1-2 |
| A | JP 2005-227372 A (Koken Co., Ltd.), 25 August, 2005 (25.08.05), Par. Nos. [0006] to [0008]; Figs. 1 to 3 (Family: none) | 1-2 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 17 December, 2008 (17.12.08) | Date of mailing of the international search report 06 January, 2009 (06.01.09) |
| --- | --- |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/067697

C (Continuation).    DOCUMENTS CONSIDERED TO BE RELEVANT

| Category* | Citation of document, with indication, where appropriate, of the relevant passages | Relevant to claim No. |
|---|---|---|
| A | JP 59-30582 A (Testa-Laboratorium A/S), 18 February, 1984 (18.02.84), Page 3, upper left column, line 15 to page 4, upper left column, line 10; Figs. 1 to 4 & US 4484896 A          & EP 0094029 A1 & DE 3362662 D          & DK 200182 A | 1-2 |
| A | CD-ROM of the specification and drawings annexed to the request of Japanese Utility Model Application No. 94166/1991(Laid-open No. 38667/1993) (Koken Co., Ltd.), 25 May, 1993 (25.05.93), Par. Nos. [0006] to [0008]; Fig. 1 (Family: none) | 1-2 |
| A | CD-ROM of the specification and drawings annexed to the request of Japanese Utility Model Application No. 64452/1993(Laid-open No. 33350/1995) (Tomio FUKUHARA), 20 June, 1995 (20.06.95), Par. Nos. [0006] to [0009]; Figs. 2 to 4 (Family: none) | 1-2 |
| A | JP 7-210080 A (Koken Co., Ltd.), 11 August, 1995 (11.08.95), Par. No. [0006]; Fig. 2 (Family: none) | 1-2 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005227372 A